# EUROPÄISCHE PATENTSCHRIFT

(11) **EP 0 934 108 B1**
(45) Veröffentlichungstag und Bekanntmachung des Hinweises auf die Patenterteilung: **10.10.2001**
(21) Anmeldenummer: 97940066.0
(22) Anmeldetag: 09.08.1997
(51) Int. Cl.: B01D 35/14, B01D 35/143, B01D 35/147

(54) **FILTER, INSBESONDERE ZUR FILTRIERUNG DES SCHMIERÖLS EINER BRENNKRAFTMASCHINE**
FILTER, IN PARTICULAR FOR FILTERING THE LUBRICATING OIL IN AN INTERNAL COMBUSTION ENGINE
FILTRE S'UTILISANT NOTAMMENT POUR FILTRER L'HUILE DE LUBRIFICATION D'UN MOTEUR A COMBUSTION INTERNE

(30) Priorität: 26.10.1996 DE 19644646
(43) Veröffentlichungstag der Anmeldung: 11.08.1999
(73) Patentinhaber: FILTERWERK MANN & HUMMEL GmbH, 71631 Ludwigsburg (DE)
(72) Erfinder: JAINEK, Herbert, D-70074 Heilbronn (DE); WIEDERHOLD, Roland, D-71711 Steinheim (DE)
(74) Vertreter: Voth, Gerhard, Dipl.-Ing.
(86) Internationale Anmeldenummer: EP9704351
(87) Internationale Veröffentlichungsnummer: WO9818539

(56) Entgegenhaltungen:
- EP-A- 0 559 011
- WO-A-92/17262
- DE-A- 4 215 232
- DE-U- 9 411 212
- FR-A- 1 574 913
- US-A- 3 150 633
- US-A- 3 368 680
- US-A- 4 721 563

## Beschreibung

Die Erfindung betrifft ein Filter, insbesondere zur Filtrierung des Schmieröls einer Brennkraftmaschine nach dem Oberbegriff des Hauptanspruchs.

Aus der EP-A-03 14 915 ist ein Ölfilter für die Reinigung von Schmieröl bei Verbrennungsmotoren von Kraftfahrzeugen bekannt. Dieses besteht aus einem zumindest annähernd stehend angeordneten Filtergehäuse mit einem mit diesem verschraubbaren Deckel, ferner mit einer in das Filtergehäuse eingesetzten ringförmigen Ölfilterpatrone, welcher das verunreinigte Öl zugeführt wird. Am Boden des Ölfiltergehäuses ist ein Bodenablaufventil angeordnet, welches beim Öffnen des Deckels und Entfernen der Ölfilterpatrone einen Ablaufkanal freigibt. Das Ventil besteht aus zwei Federn und einer Ventilplatte und ist derart gestaltet, daß auch bei fehlender Ölfilterpatrone sich dasselbe aufgrund des aufbauenden Öldrucks verschließt, so daß eine Ölversorgung des Motors auch dann sichergestellt ist, wenn keine Filterpatrone eingesetzt ist.

Ein Nachteil besteht jedoch darin, daß bei fehlendem Filtereinsatz das ungereinigte Öl zu den Schmierstellen gelangt und dazu führt, daß Lagerschäden auftreten. Der Motor kann zwar ohne Ölfilterpatrone für kurze Zeit im Notbetrieb genutzt werden, allerdings wird dabei nicht erkannt, daß keine Ölfilterpatrone eingesetzt ist.

Aus der DE 42 15 232 A1 ist ein Kraftstofffilter bekannt, welches einen Einlauf- und Auslaufstutzen aufweist und eine dicht verschließbare Öffnung zum Ein- und Ausbau von wenigstens einem Filtereinsatz. Damit ein Verschließen des Deckels nicht erfolgen kann, wenn kein Filtereinsatz in dem Gehäuse angeordnet ist, wird eine Montageplatte mit einem Verschiebeelement versehen, wobei dieses Verschiebeelement über den Filtereinsatz von einer Sicherungsposition in eine Freigabeposition verlagerbar ist. Pro Filterelement sind zwei bzw. drei Verschiebeelemente vorgesehen. Dieses System ist sehr aufwendig. Es besteht die Gefahr, dass durch eine falsche Bedienung trotz Sicherungselement ein Verschließen des Filters ohne Filtereinsatz möglich ist.

Der Erfindung liegt daher die Aufgabe zugrunde, ein Filter, insbesondere zur Filtrierung des Schmieröls einer Brennkraftmaschine zu schaffen, das einen fehlenden Filtereinsatz signalisiert bzw. einen Betrieb des Motors bei fehlendem Filtereinsatz verhindert und gleichzeitig eine einfache konstruktion aufweist.

Diese Aufgabe wird ausgehend von dem Oberbegriff des Hauptanspruchs durch dessen kennzeichnenden Merkmale gelöst.

Ein Vorteil der Erfindung liegt darin, daß mit einem Sicherungselement ein Verschließen des Gehäuses mittels des Deckels bei fehlendem Filterelement unmöglich wird.

Gemäß einer Ausgestaltung der Erfindung kann das Sicherungselement ein Kippelement oder Kipphebel sein, welcher das Aufschrauben des Deckels auf das Gehäuse durch eine Sperrwirkung verhindert. Das Kippelement blockiert aufgrund der Schwerkraft oder einer Feder bei fehlendem Filtereinsatz das Aufsetzen des Deckels.

In einer weiteren Ausgestaltung der Erfindung ist vorgesehen, ein Überdruckventil oder ein Bypassventil zwischen Rohölseite und Reinölseite anzuordnen, wobei auch hier eine Überwachung der Funktion des Ventils mit einem Stößel, der eine Offenstellung des Ventils anzeigt, möglich ist.

Das Filterelement ist recycelbar und besteht aus einem zickzackförmig gefalteten Filtermaterial, welches an seinen Stirnflächen jeweils mit einer Vergußmasse versehen ist. Diese Vergußmasse ist beispielsweise Nitrilkautschuk und bewirkt nach Art einer Radialdichtung eine Trennung des Rohflüssigkeitsraumes von dem Reinflüssigkeitsraum.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird nachfolgend anhand eines Ausführungsbeispiels näher erläutert. Es zeigt
- Figur 1: die Schnittdarstellung eines Filters zur Filtrierung von Schmieröl,
- Figur 2: eine Detaildarstellung,
- Figur 3: eine Draufsicht auf ein Sicherungselement,
- Figur 4: eine Detaildarstellung des Sicherungselements in der Sperrstellung.

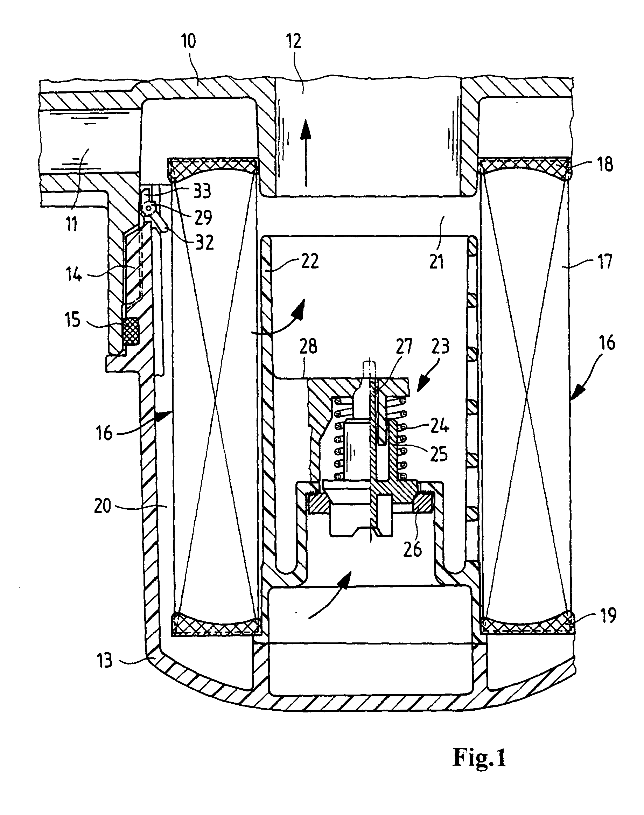

Ein Filter gemäß Figur 1 besteht aus einem Gehäuse 10 mit einem Rohölflüssigkeitszulauf 11 und einem Reinölflüssigkeitsablauf 12. Das Gehäuse ist mit einem Deckel 13 verschlossen. Die Befestigung des Deckels und die Abdichtung erfolgt über eine Schraubverbindung 14 und ein Abdichtelement 15. In dem Gehäuse befindet sich ein Filterelement 16. Dieses besteht aus einem plissierten Papier- oder Vlieselement 17, das an seinen stirnförmigen Enden mit Kunststoffendscheiben 18, 19 versehen ist. Die Endscheiben dienen gleichzeitig zum radialen Abdichten zwischen dem Rohflüssigkeitsbereich 20 und dem Reinflüssigkeitsbereich 21.

In dem Reinflüssigkeitsbereich ist ein Stützkörper 22 angeordnet. Dieser ist mit einem Überdruckventil 23 versehen. Das Überdruckventil besteht aus einer Druckfeder 24, einem Ventilkörper 25 sowie einer mit dem Stützkörper 22 verschweißten Ventilplatte 26. Zur Montage des Ventils wird lediglich die Druckfeder 24 in den Stützkörper eingelegt, anschließend der Ventilkörper 25 und die Ventilplatte 26 übergestülpt und die Ventilplatte 26 beispielsweise im Ultraschallschweißverfahren mit dem Stützkörper 22 befestigt. Der Ventilkörper ist mit einem Signalstift 27 versehen. Dieser ist normalerweise in der Geschlossenstellung nicht sichtbar. Falls das Ventil sich aufgrund eines Verkantens in der Offenstellung befindet, ragt dieser Stift gemäß dem gestrichelt dargestellten Verlauf über die Ebene 28 des Stützkörpers 22 hinaus und zeigt damit die mangelnde Betriebsbereitschaft an.

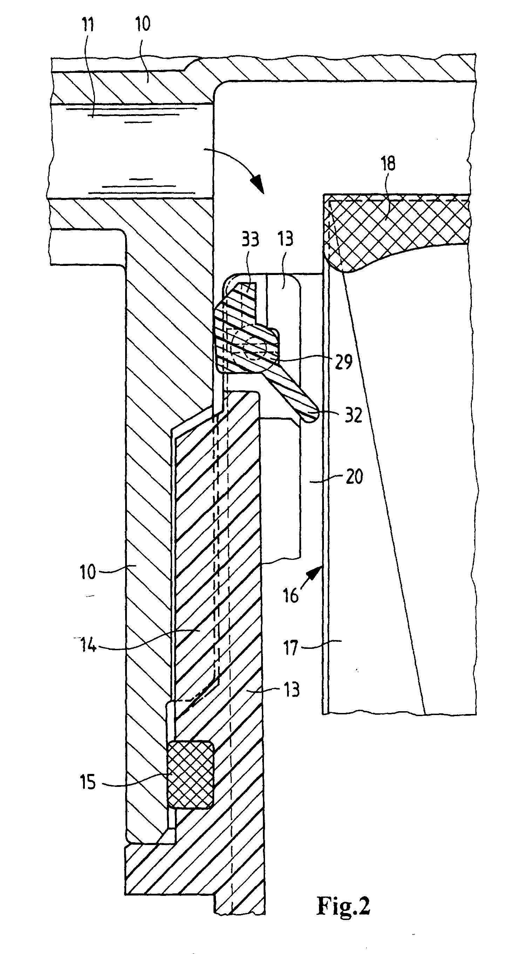

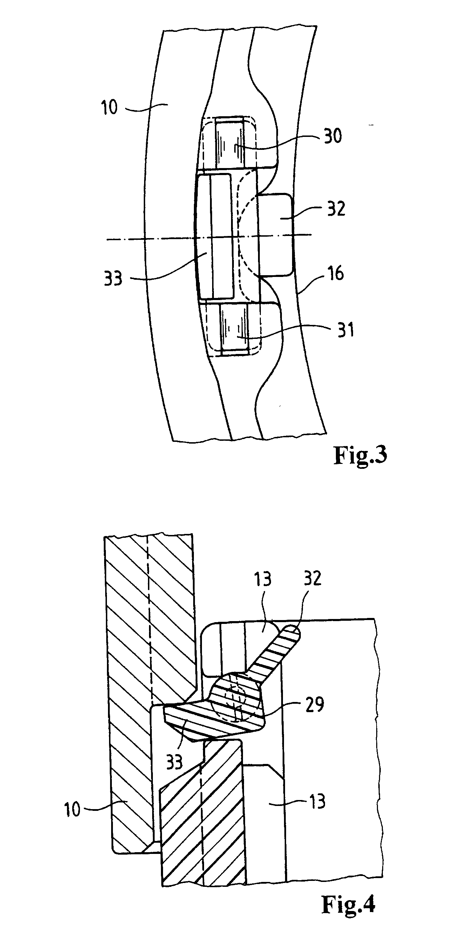

Zur Verhinderung des Verschließens des Deckels 10 bei fehlendem Filterelement 16 ist ein Sicherungselement 29 vorgesehen. Dieses ist in Figur 2 in einer Detaildarstellung gezeigt. Das Sicherungselement befindet sich am Gehäuse 13 des Filters und ist, wie in der Draufsicht gemäß Figur 3 erkennbar, mit Achsstücken 30, 31 versehen und drehbar gelagert. Bei eingesetztem Filterelement 16 liegt der Hebelarm 32 an dem Filterelement 16 an und stellt damit die Sperre 33 des Sicherungselements 29 in eine Lage, die ein Aufsetzen des Deckels 10 auf das Gehäuse 13 ermöglicht.

In Figur 4 ist die Stellung des Sicherungselements 29 gezeigt, die dasselbe bei fehlendem Filterelement einnimmt. Aufgrund der Schwerkraft und der größeren Masse der Sperre 33 kippt das Sicherungselement in die gezeigte Stellung. Damit verhindert die Sperre 33 wirksam das Aufsetzen des Deckels 10 auf das Gehäuse 13. Erst das Einschieben eines Filterelements bringt das Sicherungselement 29 wieder in die Sollposition gemäß Figur 2.

## Patentansprüche

1. Filter, insbesondere zur Filtrierung des Schmieröls einer Brennkraftmaschine, bestehend aus einem Gehäuse mit einem Zulauf und einem Ablauf, einem in dem Gehäuse angeordneten Filterelement, einem das Gehäuse verschließenden und Zugang zu dem Filterelement verschaffenden Deckel und aus einem Sicherungselement (29), welches ein Verschließen des Gehäuses (13) mittels des Deckels (10) bei fehlendem Filterelement (16) verhindert, **dadurch gekennzeichnet daß** das Sicherungselement (29) ein am Gehäuse (13) oder Deckel (10) befestigtes Kippelement ist, welches bei fehlendem Filterelement (16) aufgrund der Schwerkraft in die Sperrstellung kippt auf ein Aufsetzen des Deckels (10) auf das Gehäuse (13) verhindert.

2. Filter nach Anspruch 1, **dadurch gekennzeichnet, dass** ein Überdruckventil (23) vorgesehen ist, welches ab einer bestimmten Druckdifferenz zwischen Rohölseite (20) und Reinölseite (21) eine Umgehung des Filterelementes (16) schafft, wobei das Ventil mit einem Stößel (27) versehen ist, der eine Offenstellung des Ventils (23) anzeigt.

3. Filter nach einem der vorherigen Ansprüche, **dadurch gekennzeichnet, dass** das Filterelement (16) aus einem zickzackförmig gefalteten Filtermaterial (17) besteht und an seinen Stirnflächen mit jeweils einer Vergussmasse (18, 19) versehen ist, wobei die Vergussmasse zum Abdichten des Rohflüssigkeitsraumes (20) gegenüber dem Reinflüssigkeitsraum (21) als Radialdichtungselement ausgebildet ist.

## Claims

1. Filter, more especially for filtering the lubricating oil of an internal combustion engine, comprising a housing with an inlet and an outlet, a filter member which is disposed in the housing, a cover which closes the housing and provides access to the filter member, and a safety element (29) which prevents the housing (13) from being closed by means of the cover (10) if there is no filter member (16), **characterised in that** the safety element (29) is a pivotable member, which is mounted on the housing (13) or cover (10) and, when pivoted into the blocking position due to the force of gravity, prevents the cover (10) from being placed upon the housing (13) if there is no filter member (16).

2. Filter according to claim 1, **characterised in that** an excess-pressure valve (23) is provided, which causes the filter member (16) to be bypassed once a predetermined pressure difference exists between unfiltered oil side (20) and filtered oil side (21), the valve being provided with a stem (27) which indicates an open position of the valve (23).

3. Filter according to one of the previous claims, **characterised in that** the filter member (16) is formed from a filter material (17), which is folded in a zigzag-shaped manner, and said member is provided with a sealing compound (18, 19) at each of its end faces, the sealing compound being configured as a radial sealing element for sealing the unfiltered fluid chamber (20) from the filtered fluid chamber (21).

## Revendications

1. Filtre, notamment pour filtrer l'huile de lubrification d'un moteur à combustion interne, composé d'un boîtier avec une entrée et une sortie, d'un élément filtrant dans le boîtier, d'un couvercle fermant le boîtier et constituant l'accès à l'élément filtrant, et d'un élément de sécurité (29) empêchant de fermer le boîtier (13) au moyen du couvercle (10) en l'absence de l'élément filtrant (16),
**caractérisé en ce que**
l'élément filtrant (29) est un élément basculant fixé au boîtier (13) ou au couvercle (10) et qui, en l'absence de l'élément filtrant (16) bascule sous l'effet de la gravité pour venir en position d'arrêt qui empêche de placer le couvercle (10) sur le boîtier (13).

2. Filtre selon la revendication 1,
**caractérisé en ce qu'**
il est prévu une soupape de surpression (23) qui, à partir d'une certaine différence de pression entre le côté huile brute (20) et le côté huile purifiée (21), crée une déviation évitant l'élément filtrant (16), cette soupape portant un poussoir (27) indiquant la position d'ouverture de la soupape (23).

3. Filtre selon l'une quelconque des revendications 1 ou 2,
**caractérisé en ce que**
l'élément filtrant (16) est constitué d'un matériau filtrant (17) plié en accordéon et porte sur chacune de ses faces frontales une masse coulée (18, 19), chaque masse ayant la forme d'un élément radial créant l'étanchéité entre la chambre à liquide brut (20) et la chambre à liquide purifié (21).
